(19)

Europäisches Patentamt

European Patent Office

Office européen des brevets

(11) **EP 4 485 352 A1**

(12) **EUROPEAN PATENT APPLICATION**

(43) Date of publication:
**01.01.2025 Bulletin 2025/01**

(21) Application number: **23188671.4**

(22) Date of filing: **31.07.2023**

(51) International Patent Classification (IPC):
*G06T 7/149* (2017.01)

(52) Cooperative Patent Classification (CPC):
**G06T 7/149;** G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2023 PCT/CN2023/202310**

(71) Applicant: **Koninklijke Philips N.V.
5656 AG Eindhoven (NL)**

(72) Inventors:
• **CHEN, Hongxin
Eindhoven (NL)**

• **PETERS, Jochen
Eindhoven (NL)**
• **NICKISCH, Hannes
5656AG Eindhoven (NL)**
• **WEESE, Rolf Jürgen
Eindhoven (NL)**
• **HEESE, Harald Sepp
Eindhoven (NL)**
• **WIEMKER, Rafael
Eindhoven (NL)**
• **NI, Wei
Eindhoven (NL)**

(74) Representative: **Philips Intellectual Property &
Standards
High Tech Campus 52
5656 AG Eindhoven (NL)**

(54) **IMAGE SEGMENTATION USING A POINT DISTRIBUTION MODEL**

(57)     Some embodiments are directed to a system for segmenting a medical object in medical image data. An image model may be applied to image data to obtain at least part of a set of shape parameters for the medical object. A point distribution model is applied to the set of shape parameters to obtain a set of points representing the shape of the medical object.

Fig. 2a

**EP 4 485 352 A1**

**Description**

FIELD OF THE INVENTION

The presently disclosed subject matter relates to a system for segmenting a medical object in medical image data, a method for segmenting a medical object in medical image data, a computer readable medium.

BACKGROUND OF THE INVENTION

Model-based segmentation is an attractive algorithm for object segmentation. Statistical information about the shape of the object is used in fitting the shape to the new instance. Information about possible shapes may be represented by a point distribution model. During the fitting, a shape is iteratively deformed to fit to the object in an image.

In medical image segmentation tasks, like extracting heart or brain 3D masks from CT images, model-based segmentation is a widely used method which has been applied to various medical imaging segmentation products. One of the key steps in model-based segmentation is parametric adaptation which utilizes the point distribution model, also knowns as an active shape model (ASM), to fit a shape model to the image with the flexibility to deviate from the shape model in the range of the real object shape distribution.

Point distribution models have various advantages. They can be trained on a small data set and still achieve good performance. The point distribution model restricts the variation of a shape in a reasonable deviation. Unfortunately, point distribution models are sensitive to noise in the prediction. It was found in practice that this may lead to non-convergence of the final segmentation. Especially if a segmentation optimization is started from a less than ideal starting point, there is a chance that the segmentation will not converge on the true object, but diverges away from it.

Another approach to segmentation are deep neural network-based object segmentation. This approach can be successful for medical imaging. However, neural networks for segmentation are large and need large training datasets.

SUMMARY OF THE INVENTION

In an embodiment, an image model is used to predict the inputs for the point distribution model, e.g., the shape parameters, also known as point distribution model coefficients, or scaling values. The image model may comprise a neural network. This keeps the advantage of a stable shape variation imposed by the point distribution model while reducing the sensitivity to image noise, artifacts and target localization errors.

In an embodiment, the point set that corresponds to the shape parameters predicted by the image model are used as an initial segmentation for a model-based segmentation algorithm, e.g., a further iterative optimization. The problem of non-convergence is reduced because a much better starting point for the optimization is used. The optimization may optimize the shape parameters. In this case, the point distribution model is used to map the shape parameters to a point set in order to compute a loss function indicating a fit between the point set and the object in the medical image data. Alternatively, the optimization may optimize the point set directly. In this case, the point distribution model is used to map the shape parameters produced by the image model to a point set which is used as the initial point set from which optimization starts. Both approaches may be used as well.

A segmentation mesh may be produced from the eventual point set.

Combining a point distribution model and an image model, especially a neural network based one, turns out to be a good approach to segmentation. Furthermore, the size of the neural network used in the image model may be small compared to a neural network-only segmentation, as the neural network needs to predict fewer parameters.

Some embodiments are directed to a system for segmenting a medical object in medical image data. An image model may be applied to medical image data to obtain at least part of a set of shape parameters for the medical object. A point distribution model is applied to the set of shape parameters to obtain a set of points representing the shape of the medical object.

A person skilled in the art will appreciate that the method may be applied to multidimensional image data, e.g., to two-dimensional (2D), three-dimensional (3D) or four-dimensional (4D) images, acquired by various acquisition modalities such as, but not limited to, standard X-ray Imaging, Computed Tomography (CT), Magnetic Resonance Imaging (MRI), Ultrasound (US), Positron Emission Tomography (PET), Single Photon Emission Computed Tomography (SPECT), and Nuclear Medicine (NM).

A further aspect is a segmentation method. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium. Another aspect of the presently disclosed subject matter is a method of making the computer program available for downloading.

BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Fig. 1 schematically shows an example of an embodiment of a medical segmentation training and segmentation system,
Fig. 2a schematically shows an example of an embodiment of a medical segmentation system,
Fig. 2b schematically shows an example of an embodiment of a medical segmentation system,
Fig. 2c schematically shows an example of an embodiment of a medical segmentation system,
Fig. 2d schematically shows an example of an embodiment of a medical segmentation system,
Fig. 2e schematically shows an example of an embodiment of a medical segmentation system,
Fig. 3a schematically shows an example of an embodiment of a medical segmentation system,
Fig. 3b schematically shows an example of an embodiment of a medical segmentation system,
Fig. 4 schematically shows an example of an embodiment of shape parameters,
Fig. 5 schematically shows an example of an embodiment of a medical segmentation method,
Fig. 6a schematically shows a computer readable medium having a writable part comprising a computer program according to an embodiment,
Fig. 6b schematically shows a representation of a processor system according to an embodiment.

DETAILED DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

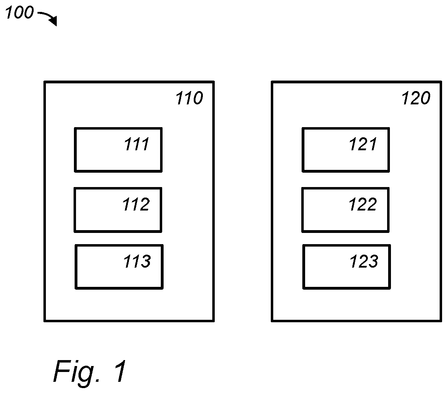

Fig. 1 schematically shows an example of an embodiment of a segmentation system 110 and of an embodiment of a segmentation training system 120. Segmentation system 110 and training system 120 may be part of a segmentation and segmentation training system 100.

Segmentation system 110 is configured to segment medical image data.

Embodiments of the segmentation system may be configured for various types of image data, including 2D, 2D+T (2D plus time, such as video sequences), 3D, and 3D+T (3D plus time, such as 3D volumes over a certain period). For instance, a 2D image might be a single X-ray scan or ultrasound scan, while 2D+T data might correspond to a sequence of X-ray scans or ultrasound frames, e.g., capturing the motion of the heart. 3D data could be a single CT or MRI volume, and 3D+T data could represent a series of such volumes, showing the progression of a condition over time, or of a moving organ, say a heartbeat.

Embodiments of the segmentation system may be configured to accommodate a wide range of medical imaging modalities. These can include, but are not limited to, Magnetic Resonance Imaging (MRI) scans, X-ray scans, rotational X-rays, Computed Tomography (CT) scans, Cone Beam Computed Tomography scans, ultrasound images, Single Photon Emission Computed Tomography (SPECT), and Positron Emission Tomography (PET).

3D image data may be represented as multiple 2D images, e.g., slices of the same person, a 3D array, or a point cloud, or the like.

By accommodating diverse imaging modalities and data types, the segmentation systems may cater to a broad spectrum of medical applications and enhance the efficiency and accuracy of medical image analysis.

A medical segmentation system may receive medical image data and identify within it a medical object of interest, such as a tumor, organ, vascular structure, or other anatomical features. For instance, the system can delineate the object by producing a set of points that define the boundaries of the object or creating a mesh representation, or the like. To generate a mesh representation, in an embodiment, a point representation may be determined first as an intermediate data structure. The mesh may be derived from the point set. Converting a point cloud to a 3D mesh may use a process known as 3D reconstruction. For example, the conversion may comprise connecting the points in the point set to form a network of triangles that approximates the surface of the object.

The segmentation allows healthcare practitioners to analyze the medical image data more efficiently and with greater specificity. By focusing on critical areas of the image, the system can enhance diagnostic evaluations and treatment planning processes.

An additional visualization unit could be integrated into the system to take the segmented data and generate visualizations of the identified objects, in particular three-dimensional representations. This feature can provide medical professionals with a better spatial understanding of the object's position, size, and relationship to surrounding structures, which can be particularly valuable for surgical planning or radiation therapy.

Furthermore, an optional labeling unit can be integrated to label the segmented object or objects automatically based on their characteristics, enhancing medical treatment planning. For instance, in oncology, it can help track the progression of a tumor over time, or in cardiology, it can assist in understanding the changes in heart structures.

In an embodiment, segmentation system 110 comprises at least two parts: an image model and a point distribution model. The image model receives as input medical image data and outputs at least part of a set of shape parameters. The point distribution model, on the other hand, is configured to represent possible shapes of the medical object. This model takes as input the set of shape parameters derived from the image model output and outputs a set of points that characterize the shape of the object.

Segmentation system 110 may also comprise a further image model. The further image model receives as input the medical image data and outputs a geometric transformation. The transformation applied to the medical image data moves the object into a standard orientation.

Typically, the point distribution model can be implemented through matrix multiplication of a vector having the set of shape parameters as elements with a pretrained matrix. This approach allows for a broad range of shape variability, accommodating for individual anatomical variations of the medical object. Implementations may include principal component analysis (PCA) for shape parameterization or a statistical shape model (SSM) for capturing shape variations within a population.

A point distribution model may define a mean shape and multiple modes of variation. The mean shape serves as a standard or typical representation of the object in question, while the modes of variation represent the different ways that actual instances of the object can deviate from this mean shape. These variations are captured by a set of shape parameters. Each parameter defines how a particular mode of variation alters the mean shape to produce the actual shape of the object. By adjusting these parameters, the point distribution model can generate a set of points that represents the shape of a specific instance of the object.

The point distribution model may be trained using various statistical techniques. These techniques include Principal Component Analysis (PCA), Independent Component Analysis, and non-linear shape models, etc. Each of these techniques allows the system to capture and represent the variations in shape across different instances of the object.

Furthermore, the system can comprise a piece-wise linear model. In this approach, the mean shape is divided into multiple separate parts, each of which is treated independently. The shape variability, or how much each part can deviate from the mean, is then defined separately for each part. This allows for a more granular and flexible representation of the object's shape, as each part can vary independently of the others. In between the independent parts, transition regions may be defined to interpolate the shape between the independent parts. This model is particularly useful for objects with complex or irregular shapes, where different parts of the object may exhibit different patterns of variation.

The image model and/or the further image model may comprise a regression neural network. Regression is a type of supervised machine learning model, which uses a neural network to perform regression tasks. Regression is a type of prediction problem where the output is a real or continuous value, in this case shape parameters and/or geometric transformations.

The image model and/or further image model may be realized as a convolutional neural network (CNN). The trained image model is configured to recognize patterns in the medical image data associated with the medical object of interest and generate shape parameters that represent the object within the provided medical image data. Other neural network architectures such as autoencoders or transformer-based models can also be used. The neural network may be any kind of neural network which takes image data, e.g., 3D image data, as input and outputs a set of parameters, e.g., VGG, ResNet, etc.

In addition to the image model and point distribution system, the segmentation system may comprise an optimizer component. The optimizer is configured to refine the segmentation further by acting on the shape parameters from the image model, the point set from the point distribution model, or both, e.g., sequentially first optimizing the shape parameters and then optimize the corresponding point set produced by the point distribution model.

The optimizer can apply various techniques to enhance the accuracy of the segmentation, for example, gradient descent methods, evolutionary algorithms, or swarm optimization techniques. The optimizer reduces the discrepancy between the segmented object and the actual representation in the medical image data, thereby improving the segmentation's precision.

In an alternative approach to segmentation, shape parameters are derived directly from the medical image data in an optimization process, without first predicting said shape parameters with an image model, e.g., a neural network image model. A problem with this approach is that the optimization may not converge because the starting shape parameters at the beginning of the optimization are too far removed from the optimal shape parameters. An advantage of the image model is therefore that a fault modus, e.g., non-convergence of the optimization, is less likely to occur.

Training the image model may comprise reducing a loss function, wherein the loss function indicates a difference between the shape parameter produced by the image model, and a training set of shape parameters. The loss function may also or instead indicate a difference between the point set corresponding to the shape parameters, according to the point distribution model, and a training point set. Yet a further option is a loss function that indicates the difference between a training set of points and a point set obtained by applying the optimization process, e.g., refining process, to the point set corresponding to the shape parameters produced by the neural network. This latter approach is more costly as it involves performing an optimization for each training sample, on the other hand it uses the eventual output directly as a training signal. Thus lack of convergence will result in a negative training signal. To reduce the impact on training resources the optimization performed during training may be a smaller optimization than done in production. For example, the optimization during training may comprise fewer optimization cycles than optimization during production. As divergence often manifests itself early in the optimization process, this approach produces an advantageous approach, increasing convergence without undue burden on the training of the image model.

Following the optimization process, there may be further stages to increase the usability of the output. Notably, a mesh building stage could be implemented. This stage would take the optimized point set and construct a mesh, providing a three-dimensional representation of the medical object. The generated mesh can then be used in several applications such as surgical planning, patient-specific device design, or complex visualization tasks, etc.

Training system 120 is configured to train segmentation system 110 or part thereof. In particular, training system 120 may be configured to train the image model and/or the further image model. Training system 120 may also train the point distribution model, though this could also be obtained pretrained from an external source.

The point distribution model may be obtained from an external source so that no training thereof is needed. Training the point distribution model may be done on training data that comprises a plurality of sets of points representing the shape of a corresponding object. Known techniques for characterizing the shape variability may be employed. Training the point distribution model does not necessarily need image data, only point sets. The point distribution model is preferably fixed before training the image model, although this is not strictly necessary; in an embodiment, the two models could be trained together.

The image model is trained to predict shape parameters from input medical image data. The shape parameters define set of points through the point distribution model. The latter defines the object of interest in the medical image data. The image model may be trained for one particular object, e.g., to segment a particular organ, e.g., a heart, etc. The image model may be trained to recognize the same medical object type as the point distribution is trained to define the shapes of.

Segmentation system 110 may comprise a processor system 111, a storage 112, and a communication interface 113. Training system 120 may comprise a processor system 121, a storage 122, and a communication interface 123.

In the various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Storage 112, 122, 132, and 142 may be, e.g., electronic storage, magnetic storage, etc. The storage may comprise local storage, e.g., a local hard drive or electronic memory. Storage 112, 122, 132, and 142 may comprise non-local storage, e.g., cloud storage. In the latter case, storage 112, 122, 132, and 142 may comprise a storage interface to the non-local storage. Storage may comprise multiple discrete sub-storages together making up storage 112, 122, 132, and 142.

Storage 112 and/or 122 may be non-transitory storage. For example, storage 112 and/or 122 may store data in the presence of power such as a volatile memory device, e.g., a Random Access Memory (RAM). For example, storage 112 and/or 122 may store data in the presence of power as well as outside the presence of power such as a non-volatile memory device, e.g., Flash memory. Storage may comprise a volatile writable part, say a RAM, a non-volatile writable part, e.g., Flash. Storage may comprise a non-volatile non-writable part, e.g., ROM.

Devices 110 and 120 may communicate internally, with each other, with other devices, external storage, input devices, output devices, and/or one or more sensors over a computer network. The computer network may be an internet, an intranet, a LAN, a WLAN, etc. The computer network may be the Internet. The devices 110 and 120 may comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

Communication interface 113 may be used to send or receive digital data, e.g., image data, shape parameters, point sets, segmentation meshes, etc. Communication interface 123 may be used to send or receive digital data, e.g., training data, image model parameters, point distribution model parameters, etc.

Segmentation system 110 and training system 120 may have a user interface, which may include well-known elements such as one or more buttons, a keyboard, display, touch screen, etc. The user interface may be arranged for accommodating user interaction for performing a segmentation, a training, etc.

The execution of devices 110 and 120 may be implemented in a processor system. The devices 110 and 120 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, the segmentation system 110, training system 120 each comprise one or more microprocessors which executes appropriate software stored at the device; for example, that software may have been downloaded and/or stored in a corresponding memory, e.g., a volatile memory such as RAM or a non-volatile memory such as Flash.

Instead of using software to implement a function, devices 110 and 120 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, devices 110 and 120 may comprise circuits, e.g., for cryptographic processing, and/or arithmetic processing.

In hybrid embodiments, functional units are implemented partially in hardware, e.g., as coprocessors, e.g., image coprocessors, and partially in software stored and executed on the device.

The segmentation system and training system may be connected through a computer network, e.g., the Internet.

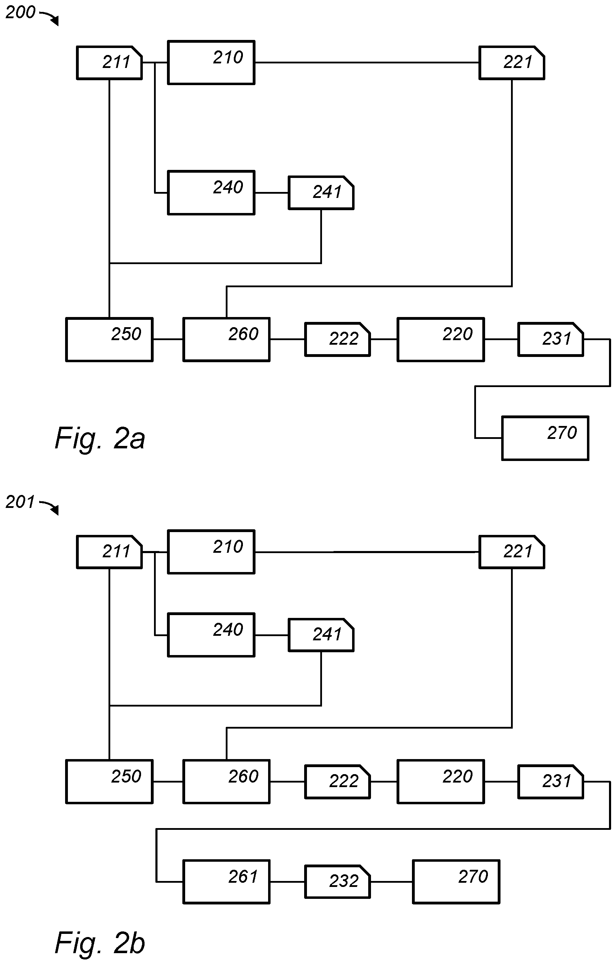

Fig. 2a schematically shows an example of an embodiment of a medical segmentation system 200. System 200 is described in its fully trained state. Training components of system 200 may be done using conventional training algorithms, e.g., Adams, gradient descent, principal components, etc.

System 200 is configured to receive image data 211. Image data 211 may be 2D or 3D image data, possibly also extending in time. The image data may be as described herein, e.g., MRI, X-ray, etc.

System 200 comprises an image model 210, which is applied to image data 211. Image model 210 is configured to produce a set of shape parameters 221 for a medical object in image data 211. The medical object may be as described herein, e.g., a tumor, or an organ, etc. The image model may be as described herein; for example, the image model may comprise a neural network, e.g., a convolutional neural network.

The shape parameters can be converted into a point set by a point distribution model. The point distribution model is configured to represent possible shapes of the medical object, taking as input a set of shape parameters, and outputting a set of points representing the shape of the object. The point set corresponding to shape parameters 221 represents the shape of the medical object found by image model 210 in image data 211. For example, image model 210 may identify in image data 211 the medical object and its shape, and determine shape parameters for which the corresponding point set represents said shape.

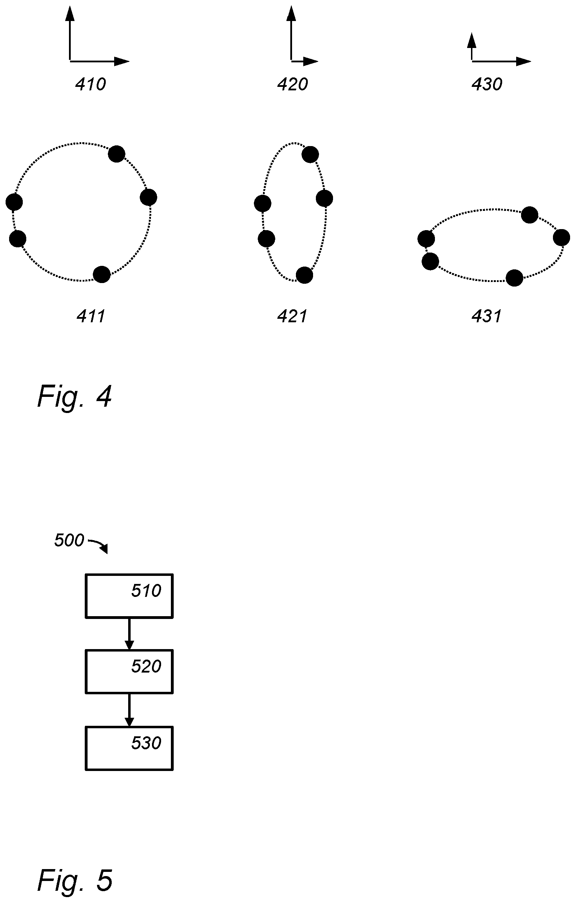

Fig. 4 schematically shows an example of an embodiment of shape parameters. Shown in Fig. 4 are three point sets: point sets 411, 421, and 431. Each point set represents a particular shape. In this example, the shapes are ovals, but in an embodiment the shapes are medical objects. Although each point set comprises 5 points, each point set is described with only two shape parameters: shape parameters 410, 420 and 430. A point distribution model maps the shape parameters to the point set; in this exemplifying illustration two shape parameters are mapped to 5 points.

In the context of a medical object, the point set represents the shape of the medical object. For example, parts of the point set correspond to specific anatomical features of the medical object in the image data. The number of points needed to adequately represent a medical object, e.g., a 3D structure like the heart, can vary widely, and it depends on a number of factors including the precision needed, the complexity of the shape, and the intended application. For a simple, rough estimation of a heart's structure, one might use, say, 20 points to outline key features of the heart. The number of points may increase for more precision, such as for surgical planning or complex diagnostic tasks. Accordingly, the number of points used may go up to, say, hundreds or even thousands of points; for example, the number of points in a point set may be between 20 and 2000 points. Nevertheless, a relatively small number of shape parameters, also referred to as modes, often account for most of the variation in the medical object's shape. For example, about 10 to 20 shape parameters capture most of the shape variation such as in a set of hearts.

Returning to Fig. 2a.

In this embodiment, the point distribution model is configured to represent the shape of the object in a normalized orientation. A normalized orientation refers to a standardized way of orienting the object, which enables consistent analysis and comparison across different images or instances of the object. A normalized orientation also facilitates a better point distribution model. For example, in the context of medical object, say a heart, the object could be oriented in the normalized orientation such that the same anatomical structures, e.g., the apex or the atria, are in the same position across different images.

In this embodiment, the point sets produced by the point distribution model are in the normalized orientation. To facilitate further comparison between the point set and the image data, and/or further optimization of the point set and/or shape parameters it is beneficial to determine a geometric transformation that transforms the medical object in image data 211 into a normalized orientation, e.g., into a predetermined orientation. For example, the predetermined orientation may be orientation of one object, singled-out in the training data.

To this end, system 200 comprises a further image model 240. Further image model 240 takes as input medical data 211 and outputs parameters of a geometric transformation 241. Geometric transformation 241, when applied to image data 211, changes the orientation of the medical object in the image data into the normalized orientation.

The geometric transformations may be restricted to a class of transformations, depending on the application. In an embodiment, the geometric transformation is one of a rigid transformation, an orthogonal transformation, a similarity transformation, and an affine transformation.

In a rigid transformation, the transformation is restricted to rotation and translation. This is a typical choice for most embodiments. An orthogonal geometric transformation allows reflection in addition to rigid transformation to bring the medical object into a normalized orientation. For example, such a choice may be appropriate for medical structures that occur twice in a human body but reflected, e.g., knees, eyes, etc., e.g., in a right orientation and a left orientation. Accordingly, a normalized orientation may be the right medical object, e.g., the right eye, right knee, etc. A similarity transformation, also known as a congruence transformation, allows rigid transformations, and uniform scaling. Affine transformations are a broader class of transformations that includes operations like translation, rotation, reflection, scaling, including non-uniform scaling, e.g., different scaling factors can be applied to different axes.

The geometric transformation may be expressed as a translation vector and a matrix according to the geometric transformation type chosen. Further image model 240 and image model 210 may share a neural network. For example, further image model 240 and image model 210 may be different heads on the same neural network.

A transformer 250 is configured to transform image data 211 according to geometric transformation 241. As a result, after the geometric transformation the orientation of the medical object in image data 211 is the same as that of a point set represented by shape parameters 221. For example, the point set would fit on the object in the image data.

System 200 further comprises an optimizer 260. Optimizer 260 takes as input the shape parameters 221 produced by image model 210 and the transformed image data, e.g., the output of transformer 250. Optimizer 260 is configured to further refine the shape parameters by applying an optimization algorithm. The optimization algorithm reduces a discrepancy between the set of points corresponding to the refined shape parameters and the actual shape of the medical object in the image data.

Optimizer 260 comprises applying the point distribution model to the shape parameters to obtain the corresponding point set. Accordingly, a fitness for the point set may be determined. Iteratively, the shape parameters are modified, the point distribution model is applied to the new shape parameters, and a fitness for the new point set may be determined, etc.

For example, the optimization algorithm may iteratively adjust the set of shape parameters to minimize a loss function. For example, the optimization algorithm may use boundary detection of the medical object to further optimize the shape parameters. Boundary detection of the medical object in image data 211 may be done using a variety of techniques, including neural networks trained on boundary detection. Distances may be determined between a boundary in the image data and a surface mesh defined by the point set indicated by the shape parameters representing the object. By minimizing the distances, the modes of the point distribution model may be optimized to better represent the shape of the object in the image.

In addition to optimizing the shape parameters, optimizer 260 may also refine the geometric transformation. This may be done likewise: a systematic variation of the parameters of the geometric transformation, guided by a loss function. The loss function could be the same as the loss function for optimizing the shape parameters.

The size of a neural network used in the image model and/or further image model may be small compared to a neural network-only segmentation, especially if an optimizer such as optimizer 260 is used. Models 210 and 240 needs to predict far fewer parameters than a full segmenting neural network would have to. Furthermore, if an optimizer such as optimizer 260 is used, the quality of the predictions of models 210 and 240 need not be as good. A reasonable starting point is enough to avoid divergence in the optimization of optimizer 260.

Optimization algorithms are further described in "Model-based segmentation using neural network-based boundary detectors", by Tom Brosch, et al., and "Automatic Model-Based Segmentation of the Heart in CT Images", by Olivier Ecabert, et al. Both references are included herein by reference.

In an embodiment, the set of shape parameters are systematically varied. The point distribution model generates the corresponding point set for each variation. The point set defines a mesh surface representing the object in the medical image data. The mesh surfaces generated by the varying point sets are then compared with the actual boundaries of the object detected in the image. The shape parameters, which results in a mesh that most accurately represents the actual object boundary, is then selected. Various algorithms can be employed for this systematic variation of the shape parameters, such as random variations, hill-climbing, simulated annealing, and particle swarm optimization, each of which may be suited to different types of images and objects.

Although optimizer 260 and point distribution model 220 are not connected in Fig. 2a, optimizer 260 will make frequent use of point distribution model 220 map a set of shape parameters to a point set, e.g., in order to evaluate the fitness of the point set, and thus of the set of shape parameters, e.g., by evaluating a loss function.

Optimizer 260 produces an optimized set of shape parameters 222. Point distribution model 220 is applied to shape parameters 222 to obtain a set of point 231. System 200 may comprise a further processing unit 270 to further use point set 231. For example, further processing unit 270 may derive a segmentation mesh from the set of points. For example, further processing unit 270 may visualize the point set and/or mesh.

Fig. 2b schematically shows an example of an embodiment of a medical segmentation system 201. System 201 is similar to system 200 but comprises an additional optimizer 261. In system 201, the optimizer 260 produces an optimized set of shape parameters 222, which is then converted into the corresponding point set 231. Optimizer 261 is configured to further optimize the point set 231 to improve the fit between point set 231 and the transformed image data from transformer 250. Whereas the point sets that can be obtained from optimizer 260 are constrained by the point distribution model-shapes that are not according to a set of shape parameters cannot be obtained by system 200-system 201 can produce any shape, not just those according to the point distribution system. An optimized point set 232 is thus obtained, which may be more accurate that point set 231. By first optimizing using a point distribution model, an accurate and biologically plausible shape is obtained, which is a good starting point for the less constrained optimization of optimizer 261 on the point level.

Optimizer 260 may also refine the geometric transformation. This may be done likewise, a systematic variation of the parameters of the geometric transformation, guided by a loss function. The loss function could be the same as the loss function for optimizing the point set.

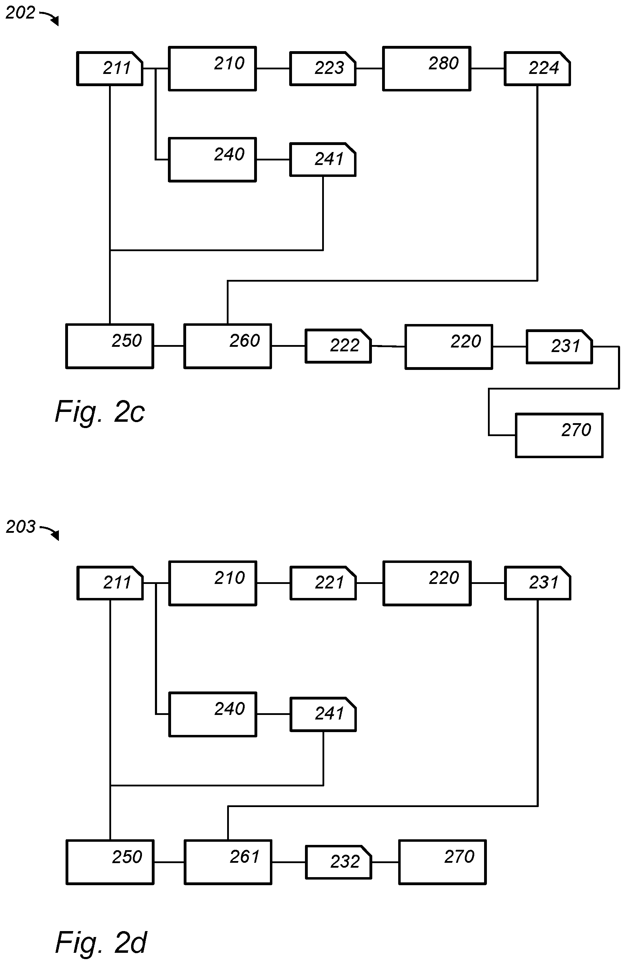

Fig. 2c schematically shows an example of an embodiment of a medical segmentation system 202. System 202 is another variation on system 200. The image model 210 of system 210 does not produce a complete set of shape parameters, but only a subset 223 thereof. A shape parameter extension unit 280 extends the incomplete shape parameters 223 to an extended set of shape parameters 224. In an embodiment, unit 280 may extend the set with default values.

For example, image model 210 may produce the shape parameters of modes that have the highest weight, e.g., that explain most of the variability of the shapes. For example, in a point distribution model derived from principal component analysis, or the like, each mode corresponds to a principal component and the amount of variance each component explains in the data set determines its importance. The first principal component accounts for the most variance in the data, the second principal component accounts for the second most variance, and so on. The relative amount of variance explained by each component can be interpreted as the importance or weight of that mode in the model.

For example, image model 210 may only predict a number of highest weight modes or shape parameters. In this case, the remainder of the shape parameters may be extended by unit 280 as zero.

For example, in an embodiment, image model 210 only predict shape parameters for the modes that account for at least 90% of the variability, or at least 95%. For example, in an embodiment, the number of predicted shape parameters is the range from 1 upto 100, e.g., from 5 up to 10. For example, in an embodiment, the number of predicted shape parameters is at most half the number of shape parameter inputs of point distribution model 220.

Predicting fewer shape parameters has the advantage that image model 210 may be smaller. As an optimizer 260 is used, the lack of a full set is not material to the end result. Optimizer 260 will provide values for the shape parameters that were not provided by the image model, e.g., that were provided to optimizer 260 with a default value such as zero. System 202 may be extended with an optimizer 261 to further optimize point set 231, e.g., as in Fig. 2b.

Fig. 2d schematically shows an example of an embodiment of a medical segmentation system 203. System 203 is a variant of system 200, except that in this system the point set is optimized directly rather than through optimizing the shape parameters.

Point distribution model 220 is applied to the output of image model 210, e.g., to shape parameters 221, thus generating a point set 231. Instead of optimizer 260 that optimizes shape parameters, system 203 comprises an optimizer 261 that directly optimizes the point set 231, thus producing an optimized point set 232.

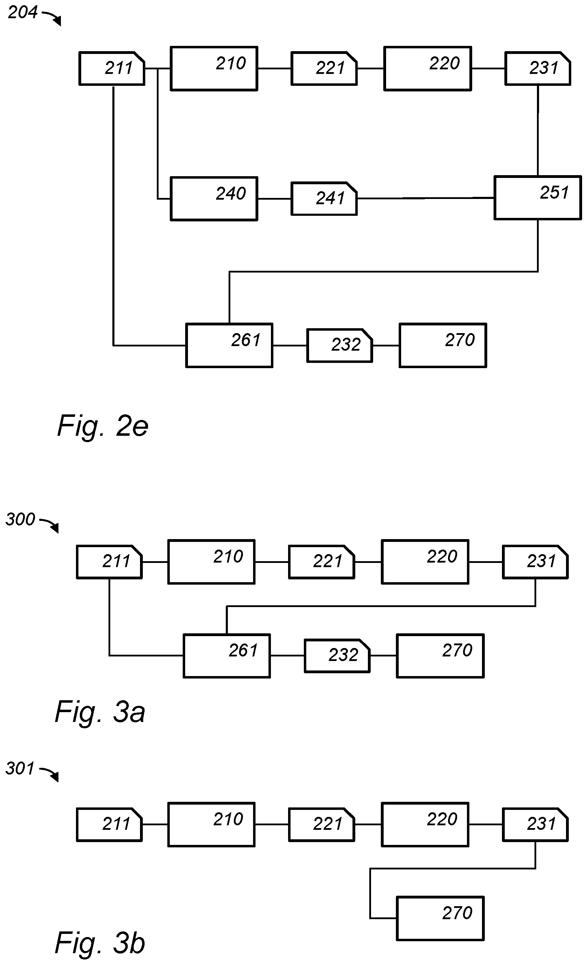

Fig. 2e schematically shows an example of an embodiment of a medical segmentation system 204. System 204 is a variant of system 203. In system 203, a geometric transformation is applied to image data 211 so that the object in image data 211 is oriented similarly to point set 231. In Fig. 2e, a transformation is applied to point set 231 instead of to the image data 211. Transformer 251 uses geometric transformation 241. In this case, the inverse transformation may be applied to point set 231 as would be applied to the image data. Transforming the point set 231 instead of the image data has the advantage that the image data remains unchanged. Transforming a point set is easier, and does not require interpolation.

In an embodiment, the image data is transformed by the geometric transformation obtained from the further model. In an embodiment, the set of points is transformed with the inverse of the geometric transformation. In an embodiment, no actual transformation is done, and coordinates in image data and point sets remain in their respective coordinate system, however they are translated to and from the other coordinate system as needed.

Fig. 3a schematically shows an example of an embodiment of a medical segmentation system 300. System 300 is similar to system 203, except that no geometric transformation is applied to the image data. For example, the optimizer 261 may be configured to account for orientation differences, or image data 211 may already be oriented, or the shapes underlying the shape parameters also account for rotational differences. In system 300, the point distribution model 220 is applied to the shape parameters 221 output by model 210, which then further optimized by optimizer 261. Alternatively or additionally, optimization could be performed on the shape parameters 221. Fig. 3b schematically shows an example of an embodiment of a medical segmentation system 301. System 301 is a variant of system 300, except that in system 301 neither optimization nor geometric transformation takes place. The image model and point distribution model are configured to handle the object in the orientations it may have in the image data.

Below a further embodiment is provided.

Embodiments combine a neural network and a point distribution model to perform an image segmentation task. The algorithm is divided into training stage and prediction stage.

In the training stage of the point distribution model, a training set of point sets representing the training objects is provided. All the sets of points are normalized with a similarity transform, e.g., shift, scale and rotation transformation. Then a statistical analysis of the shapes to describe the possible shapes. For example, PCA may be used to generate a mean shape and a set of vectors representing the key aspects of shape deviation.

Given a set of images with the points of the shape given as

$$\left\{ X_i = \left[ (x_{i0}, y_{i0}, z_{i0}), (x_{i1}, y_{i1}, z_{i1}) \ldots \left( x_{i(n-1)}, y_{i(n-1)}, z_{i(n-1)} \right) \right]^T \right\},$$

wherein each shape has n key points, and it is represented by a flat vector. The points may be key vertices of the object, e.g., so-called landmarks. It is not necessary that all points are key vertices. At least part of the points may be intermediate points, e.g., estimated by an expert user.

All the shapes are normalized to one reference shape using a similarity transformation (rotation, isotropic scaling and translation) or rigid transformation (rotation and translation). The reference shape can be any one of the shapes. Each shape i has a corresponding transformation matrix $T_i$, which matches the shape to the reference shape with the minimum matching distance. The transformation matrix $T_i$ contains rotation, shifting and scaling, which can be expressed as

$$\begin{bmatrix} x_i^{j'} \\ y_i^{j'} \\ z_i^{j'} \\ 1 \end{bmatrix} = T_i \begin{bmatrix} x_i^j \\ y_i^j \\ z_i^j \\ 1 \end{bmatrix}$$

where $\left[ x_i^j, y_i^j, z_i^j \right]^T$ is the coordinate of the jth vertex in shape $i$, and $\left[ x_i^{j'}, y_i^{j'}, z_i^{j'} \right]^T$ is the transformed coordinate. Note, that in this notation no translation vector is needed as homogenous coordinates are used. The shape deviation can now be learned from the set of training vectors, using Principal Component Analysis (PCA), or the like. The resulting Point Distribution Model (PDM) may be expressed as

$$m = \overline{m} + \sum_{m=1}^{M} p_m \emptyset_m$$

wherein $\overline{m}$ is the mean shape of the training set, $\emptyset_m$ are the first M eigenvectors with largest variance, and $p_m$ are the corresponding weights, e.g., the model parameters or shape parameters. Here the vectors $m, \overline{m}, \emptyset_m$ have the same length as the vector $X_i$.

Having the trained point distribution model, once the transformation matrix $T_i$ and the weights $p_m$ are determined, the resulting shape, e.g., a new set of vertices coordinates, can be determined by applying the point distribution model.

In a conventional active shape algorithm, the prediction stage will use some kind of feature matching method to match the model key points with a given image followed by updating the model parameters $T_i$ and $p_m$, and match again in an iterative way. The performance of this algorithm relies on the quality of the feature matching algorithm and the initial estimate of the shape parameters. If it does not work well, the iteration may not converge.

In an embodiment, a neural network is trained to predict the parameters of $T_i$ and $p_m$. In a training pipeline a neural network is linked with a trained point distribution model. The neural network takes a set of images as input, e.g., 3D images, and outputs a set of shape parameters and a geometric transform, e.g., the transformation matrix $T_i$ and the PCA weights $p_m$. The trained point distribution model takes the parameters as input and outputs the resulting shape. Typically, the mapping from shape parameters to point set is injective. So that no two different sets of shape parameters give the same point set.

During training, given a set of images as input and the corresponding ground truth shapes as target of the pipeline, the neural network may be trained until the error between the output shapes and the ground truth shapes are low enough. At this point, only the parameters of the neural network are trained, the point distribution model is fixed after its training.

In order to make the training more robust, the training dataset can be augmented by rotation, shifting and scaling transformations.

Various extensions and variants are possible. Instead of a PCA also other decompositions like an independent component analysis can be used. In addition, non-linear shape models can be used. Instead of a point distribution model learned by PCA, a piece-wise model can also be used. For that purpose, a (mean) shape is subdivided into $K$ parts and shape variability is defined by transforming each part with a transformation $L_k(p_k)$ depending on the parameters $p_k$, the transformation may be linear. To ensure that the mesh remains smooth at the transition between adjacent parts, weighting factors $w_k^j$ may be introduced which linearly interpolate the transformations. With $\overline{m}^j$ denoting vertex $j$ of the mean shape, the corresponding vertex $m^i$ generated by the piece-wise linear model may be written as

$$m^j = \sum_{k=1}^{K} w_k^j L_k(p_k)\overline{m}^j \ \text{ with } \ \sum_{k=1}^{k} w_k^j = 1$$

In this model $j$ runs over all over the vertices in the entire shape. Similar to the parameters $p_1, ..., p_M$ for a point distribution model, the parameters $p_1, ..., p_K$ describe the shape of a piece-wise linear model. Predicting the parameters of the piece-wise linear model may be done by an image model as in previous embodiments.

The training of the neural network for the prediction of the point distribution model coefficients can be done in an end-to-end fashion by using the overall segmentation accuracy as a target metric. For example, the deformable adaptation of the model-based segmentation may be treated as a sequence of quadratic optimization steps which can be cast as a smooth neural network layer.

In the limit, the neural network can predict the model-based segmentation coordinates directly from the image or with a segmentation mask as an intermediate processing step. The advantage would be potentially faster adaptation in scenarios where only a rough segmentation is required.

Fig. 5 schematically shows an example of an embodiment of a medical segmentation method 500. Method 500 may be computer implemented. Method 500 comprises

- obtaining (510) medical image data representing a medical object,
- applying (520) an image model to the image data, thus obtaining at least part of a set of shape parameters for the medical object, the image model taking as input a medical image data and outputting at least part of a set of shape parameters,
- applying (530) a point distribution model to the set of shape parameters thus obtaining a set of points representing the shape of the medical object, the point distribution model being configured to represent possible shapes of the medical object, taking as input a set of shape parameters, and outputting a set of points representing the shape of the object.

For example, the segmentation method may be a computer implemented method. For example, accessing training data, and/or receiving input image data may be done using a communication interface, e.g., an electronic interface, a network interface, a memory interface, etc. For example, storing or retrieving parameters for the image model and/or the point distribution model may be done from an electronic storage, e.g., a memory, a hard drive, etc., e.g., parameters of the networks. For example, applying a model, e.g., a neural network and/or a linear model, may be done using an electronic computing device, e.g., a computer.

A neural network for the image model and/or further image model, either during training and/or during applying may have multiple layers, which may include, e.g., convolutional layers and the like. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 500. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

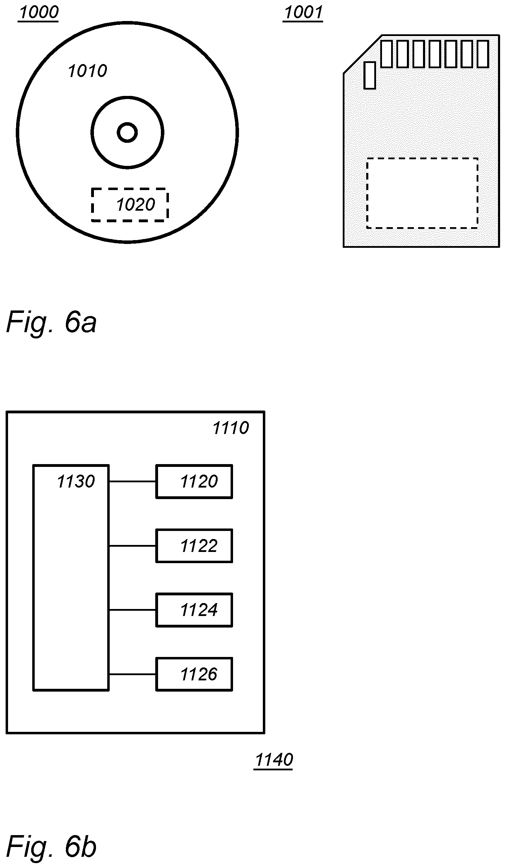

Fig. 6a shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a segmentation method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said segmentation method.

Fig. 6b shows in a schematic representation of a processor system 1140 according to an embodiment. The processor system comprises one or more integrated circuits 1110. The architecture of the one or more integrated circuits 1110 is schematically shown in Fig. 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., a segmentation device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform steps or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Reference signs list**

The following list of references and abbreviations corresponds to Figs. 1-4, and is provided for facilitating the interpretation of the drawings and shall not be construed as limiting the claims.

| | |
|---|---|
| 100 | a segmentation and segmentation training system |
| 110 | a segmentation system |
| 120 | a training system |
| 111, 121 | a processor system |
| 112, 122 | storage |
| 113, 123 | communication interface |
| 200-204 | a medical segmenting system |
| 210 | an image model |
| 211 | medical image data |
| 220 | a point distribution model |
| 221 | shape parameters |
| 222 | optimized shape parameters |
| 223 | incomplete shape parameters |
| 224 | extended shape parameters |
| 231 | a set of points |
| 232 | an optimized set of points |
| 240 | a further image model |
| 241 | a geometric transformation |
| 250, 251 | a geometric transformer |

| 260, 261 | an optimizer |
| 270 | a further processing unit |
| 280 | shape parameter extension unit |
| 300, 301 | a medical segmenting system |
| 410,420,430 | shape parameters |
| 411,412,413 | point sets |
| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

**Claims**

1. A system for segmenting a medical object in medical image data, the system comprising:

   one or more processors; and
   one or more storage devices storing instructions that, when executed by the one or more processors, cause the one or more processors to perform operations for an image model and for a point distribution model, the point distribution model being configured to represent possible shapes of the medical object, taking as input a set of shape parameters, and outputting a set of points representing the shape of the object, the image model taking as input a medical image data and outputting at least part of the set of shape parameters, wherein the operations further comprise:

      - obtaining the medical image data representing the medical object,
      - applying the image model to the medical image data, thus obtaining at least part of the set of shape parameters for the medical object,
      - applying the point distribution model to the set of shape parameters thus obtaining a set of points representing the shape of the medical object.

2. A system as in Claim 1, wherein the image model comprises a neural network.

3. A system as in any of the preceding claims, wherein the operations further comprise

      - further refine the set of points by applying an optimization algorithm, wherein said optimization algorithm reduces a discrepancy between the refined set of points and the actual shape of the medical object in the medical image data.

4. A system as in Claim 3, wherein the optimization algorithm comprises iteratively adjusting the set of shape parameters and/or the set of points to minimize a loss function.

5. A system as in any of the preceding claims, wherein the point distribution model is configured to represent the shape of the object in a normalized orientation, operations of the system being for a further image model, the further image model taking as input the medical data and outputting parameters of a geometric transformation that changes, when applied to the medical image data, the orientation of the medical object in the medical image data to the normalized orientation.

6. A system as in Claim 5, wherein the geometric transformation is one of a rigid transformation, an orthogonal transformation, a similarity transformation, and an affine transformation.

7. A system as in any of the preceding claims, wherein the operations comprise training the point distribution model on training data comprising a plurality of sets of points representing the shape of a corresponding object.

8. A system as in any of the preceding claims, wherein

   - the point distribution model is trained using principal component analysis (PCA), independent component analysis, and/or non-linear shape models, and/or
   - the point distribution system comprises a piece-wise linear model, wherein a mean shape is subdivided into multiple parts and shape variability is defined for each part.

9. A system as in any of the preceding claims, wherein a segmentation mesh is derived from the set of points.

10. A system as in any of the preceding claims, wherein the point distribution model defines a mean shape and multiple modes of variation, a set of shape parameters defining how the multiple modes of variation modify the mean shape to obtain the set of points.

11. A system as in any of the preceding claims, wherein the image model has been trained on training data comprising a plurality of medical image data and a corresponding set of shape parameters, the point distribution model being fixed during training of the image model.

12. A system as in any of the preceding claims, where the image model is trained to predict shape parameters, wherein a loss function comprises a fitness of the overall segmentation accuracy after refining of the set of shape parameters.

13. A system as in any of the preceding claims, wherein

   - the image model is configured to output the full set of shape parameters, and/or
   - the operations further comprise expanding a partial set of shape parameters outputted by the image model into a full set of shape parameters.

14. A method (500) for segmenting a medical object in medical image data, the method comprising

   - obtaining (510) medical image data representing a medical object,
   - applying (520) an image model to the medical image data, thus obtaining at least part of a set of shape parameters for the medical object, the image model taking as input a medical image data and outputting at least part of a set of shape parameters,
   - applying (530) a point distribution model to the set of shape parameters thus obtaining a set of points representing the shape of the medical object, the point distribution model being configured to represent possible shapes of the medical object, taking as input a set of shape parameters, and outputting a set of points representing the shape of the object.

15. A transitory or non-transitory computer readable medium (1000) comprising data (1020) representing instructions, which when executed by a processor system, cause the processor system to perform the method according to claim 14.

Fig. 1

Fig. 2a

Fig. 2b

Fig. 2c

Fig. 2d

204

211 — 210 — 221 — 220 — 231

240 — 241 — 251

261 — 232 — 270

**Fig. 2e**

300

211 — 210 — 221 — 220 — 231

261 — 232 — 270

**Fig. 3a**

301

211 — 210 — 221 — 220 — 231

270

**Fig. 3b**

410

411

420

421

430

431

## Fig. 4

500

510

520

530

## Fig. 5

_1000_ 1001

_1010_

_1020_

# Fig. 6a

_1110_

_1130_ _1120_

_1122_

_1124_

_1126_

_1140_

# Fig. 6b

| | Europäisches Patentamt European Patent Office Office européen des brevets | **EUROPEAN SEARCH REPORT** | Application Number EP 23 18 8671 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAOLING HU ET AL: "Deep Statistic Shape Model for Myocardium Segmentation", ARXIV.ORG, CORNELL UNIVERSITY LIBRARY, 201 OLIN LIBRARY CORNELL UNIVERSITY ITHACA, NY 14853, 21 July 2022 (2022-07-21), XP091277128, * Section 1, 3, 3.2, 3.3, 3.4, Algorithm 1; figure 2 * | 1-15 | INV. G06T7/149 |
| X | SALVI MASSIMO ET AL: "Integration of Deep Learning and Active Shape Models for More Accurate Prostate Segmentation in 3D MR Images", JOURNAL OF IMAGING, 11 May 2022 (2022-05-11), page 133, XP093137683, ISSN: 2313-433X, DOI: 10.3390/jimaging8050133 Retrieved from the Internet: URL:https://research.utwente.nl/files/2845 71363/jimaging_08_00133_v2.pdf [retrieved on 2024-07-29] * Abstract, Section 2.3, 2,4 * | 1,14 | |
| X | US 10 878 219 B2 (SIEMENS HEALTHCARE GMBH [DE]) 29 December 2020 (2020-12-29) * column 14 - column 15; figure 7 * | 1,14 | TECHNICAL FIELDS SEARCHED (IPC) G06T |
| X | US 10 032 281 B1 (GHESU FLORIN CRISTIAN [DE] ET AL) 24 July 2018 (2018-07-24) * column 7 - column 8; figure 2 * | 1,14 | |

The present search report has been drawn up for all claims

| Place of search | Date of completion of the search | Examiner |
|---|---|---|
| Munich | 30 July 2024 | Tibrewal-Fabricius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

**EP 4 485 352 A1**

## ANNEX TO THE EUROPEAN SEARCH REPORT
## ON EUROPEAN PATENT APPLICATION NO.

EP 23 18 8671

30-07-2024

| Patent document cited in search report | | Publication date | Patent family member(s) | | Publication date |
|---|---|---|---|---|---|
| US 10878219 | B2 | 29-12-2020 | CN | 109690554 A | 26-04-2019 |
| | | | EP | 3488381 A1 | 29-05-2019 |
| | | | US | 2019205606 A1 | 04-07-2019 |
| | | | US | 2021110135 A1 | 15-04-2021 |
| | | | WO | 2018015414 A1 | 25-01-2018 |
| US 10032281 | B1 | 24-07-2018 | CN | 108805877 A | 13-11-2018 |
| | | | EP | 3399501 A1 | 07-11-2018 |
| | | | US | 10032281 B1 | 24-07-2018 |
| | | | US | 2018322637 A1 | 08-11-2018 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TOM BROSCH**. *Model-based segmentation using neural network-based boundary detectors*
- **OLIVIER ECABERT**. *Automatic Model-Based Segmentation of the Heart in CT Images*